# EUROPÄISCHE PATENTSCHRIFT

(11) **EP 4 334 071 B1**
(45) Veröffentlichungstag und Bekanntmachung des Hinweises auf die Patenterteilung: **11.03.2026**
(21) Anmeldenummer: 22713667.8
(22) Anmeldetag: 15.03.2022
(51) Int. Cl.: B23K 9/167, B23K 9/29, B23K 9/32, B23K 10/02, B08B 15/04

(54) **LICHTBOGENSCHWEISSBRENNER MIT NICHT-ABSCHMELZENDER ELEKTRODE MIT EINEM BRENNERKÖRPER MIT KOMBINIERTER ABSAUG-SCHUTZGASDÜSE**
ARC WELDING TORCH WITH A NON-CONSUMABLE ELECTRODE AND WITH A TORCH BODY COMPRISING A COMBINED EXTRACTION/SHIELDING GAS NOZZLE
CHALUMEAU DE SOUDAGE À L'ARC COMPORTANT UNE ÉLECTRODE RÉFRACTAIRE AVEC UN CORPS DE CHALUMEAU COMPRENANT UNE BUSE DE GAZ D'EXTRACTION/PROTECTEUR COMBINÉE

(30) Priorität: 06.05.2021 DE 102021111780
(43) Veröffentlichungstag der Anmeldung: 13.03.2024
(73) Patentinhaber: Alexander Binzel Schweisstechnik GmbH & Co. KG, 35418 Buseck (DE)
(72) Erfinder: MUZICA, Jannik, 35075 Mornshausen (DE); CUDA, Dietmar, 35321 Laubach (DE); ROSE, Sascha, 35463 Fernwald (DE)
(74) Vertreter: Weckenbrock, Matthias
(86) Internationale Anmeldenummer: PCT/EP2022/056708
(87) Internationale Veröffentlichungsnummer: WO 2022/233483

(56) Entgegenhaltungen:
- EP-B1- 2 842 684
- DE-A1- 102018 002 654
- DE-A1- 102019 100 581
- FR-A1- 3 090 436
- JP-A- 2000 117 444
- US-A- 3 886 344
- US-A1- 2006 226 136
- MARCONI M ET AL: "Capture efficiency of integral fume extraction torches for GMA welding - Part 2", WELDING IN THE WORLD, SPRINGER, DE, vol. 54, no. 3/4, 1 March 2010 (2010-03-01), pages 15 - 33, XP001556660, ISSN: 0043-2288

## Beschreibung

Die Erfindung betrifft einen Lichtbogenschweißbrenner mit nicht-abschmelzender Elektrode und mit einem Brennerkörper mit einer kombinierten Absaug-Schutzgasdüse nach dem Oberbegriff des Anspruchs 1.

Thermische Lichtbogenfügeverfahren nutzen Energie, um die Werkstücke aufzuschmelzen und sie zu verbinden. In der Blechfertigung kommen standardmäßig "MIG-", "MAG-" sowie "WIG"- und "Plasma"-Schweißen zum Einsatz.

Lichtbogenschweißvorrichtungen erzeugen zum Aufschmelzen des Schweißgutes einen Lichtbogen zwischen dem Werkstück und einer abschmelzenden oder nicht-abschmelzenden Schweißelektrode. Das Schweißgut sowie die Schweißstelle werden von einem Schutzgasstrom gegenüber den Atmosphärengasen, hauptsächlich N2, O2, H2, der Umgebungsluft abgeschirmt.

Dabei ist die Schweißelektrode an einem Brennerkörper eines Schweißbrenners vorgesehen, der mit einem Lichtbogenschweißgerät verbunden ist. Der Brennerkörper enthält gewöhnlich eine Gruppe von innenliegenden, schweißstromführenden Bauteilen, die den Schweißstrom von einer Schweißstromquelle in dem Lichtbogenschweißgerät zur Spitze des Brennerkopfes auf die Schweißelektrode leiten, um dann von dort aus den Lichtbogen zum Werkstück zu erzeugen.

Der Schutzgasstrom umströmt die Schweißelektrode, den Lichtbogen, das Schweißbad und die Wärmeeinflusszone am Werkstück und wird diesen Bereichen dabei über den Brennerkörper des Schweißbrenners zugeführt. Eine Gasdüse leitet den Schutzgasstrom zum Vorderende des Brennerkopfes, wo der Schutzgasstrom etwa ringförmig um die Schweißelektrode aus dem Brennerkopf austritt.

Die Gasführung zur Gasdüse erfolgt im Stand der Technik in der Regel über Bauteile aus einem Werkstoff mit niedriger elektrischer Leitfähigkeit (Polymere oder Oxidkeramiken), die gleichzeitig als Isolation dienen können.

Der zum Schweißen erzeugte Lichtbogen erhitzt während des Schweißvorgangs das zu schweißende Werkstück sowie gegebenenfalls zugeführtes Schweißgut, sodass diese aufgeschmolzen werden. Durch den Lichtbogenenergieeintrag, die hochenergetische Wärmestrahlung und Konvektion kommt es zu einem signifikanten Wärmeeintrag in den Brennerkopf des Schweißbrenners. Ein Teil der eingetragenen Wärme kann durch den durch den Brennerkopf geleiteten Schutzgasstrom beziehungsweise durch die passive Kühlung in der Umgebungsluft sowie die Wärmeleitung in das Schlauchpaket wieder abgeführt werden.

Ab einer gewissen Schweißstrombelastung des Brennerkopfes ist der Wärmeeintrag jedoch so groß, dass eine sogenannte aktive Kühlung des Brennerkopfes erforderlich ist, um die eingesetzten Bauteile vor thermischem Materialversagen zu schützen. Hierzu wird der Brennerkopf aktiv mit einem Kühlmittel gekühlt, welches den Brennerkopf durchströmt und dabei die aus dem Schweißprozess aufgenommene und unerwünschte Wärme abtransportiert. Als Kühlmittel kann dabei beispielsweise entionisiertes Wasser mit Zusätzen von Ethanol oder Propanol zum Zweck des Frostschutzes verwendet werden.

Neben dem Schweißen kommt auch das Löten in Betracht, um Blechbauteile zu verbinden. Anders als beim Schweißen wird dabei nicht das Werkstück, sondern nur der Zusatzwerkstoff geschmolzen. Der Grund dafür ist, dass beim Löten zwei Kanten durch das Lot als Zusatzwerkstoff miteinander verbunden werden. Die Schmelztemperaturen des Lotwerkstoffes und der Bauteilwerkstoffe liegen weit auseinander, weshalb bei der Bearbeitung nur das Lot schmilzt. Zum Löten eignen sich neben WIG-, Plasma- und MIG-Brennern auch LASER.

Zum Lichtbogen-Löten können üblicherweise Argon I1 oder Ar-Gemische mit Beimischungen von CO2, O2 oder H2 nach DIN ISO 14175 eingesetzt werden. Beim WIG-Löten können handelsübliche WIG-Brenner verwendet werden.

Gattungsgemäß kann eine Kühlung der nicht-abschmelzenden Elektrode und damit des Brenners dadurch erreicht werden, dass die vom Schutzgas umströmten Oberflächen der Brennerbauteile möglichst groß gehalten werden.

Zur Erfassung der beim Schweißen entstehenden Rauchgase und Schadstoffe möglichst nahe am Entstehungsort, d.h. am Schweißprozess, sind Brenner mit integrierter Absaugeinrichtungen vorgesehen.

Aus der EP 2 298 485 A1 ist ein Brenner mit einem Absauggehäuse bekannt, welches den Brennerhals in einem relativ kurzen Teilabschnitt umschließt. An das Absauggehäuse ist ein Absaugschlauch angeschlossen, der parallel zum restlichen Abschnitt des Brennerhalses und zum Handgriff mit dem Brennerschlauchpaket verlegt ist.

Die EP 0 835 711 A2 betrifft einen Schweißbrenner mit einem den Brennerhals umschließenden, im Zwischenraum einen Rauchgaskanal ausbildenden Absaugrohr. Das Absaugrohr geht im vorderen Bereich in eine Absaugdüse über. Das Rauchgas wird unmittelbar an der Schweißstelle abgesaugt. Das Absaugrohr ist mittels eines Dreifachsteges und einer Überwurfmutter mit dem Brennerhals fest verbunden. Am griffseitigen Ende mündet das Absaugrohr in einen nach Art eines Bypasses außen neben dem Handgriff des Brenners geführten Absaugschlauch.

Aus der EP 3 300 827 A1 ist ein WIG-Schweißbrenner mit einer Vorrichtung zur Rauchgasabsaugung bekannt. Ein Absauggehäuse ist direkt am Brennerkopf befestigt. Das über das Absauggehäuse angesaugte Rauchgas wird durch einen flexiblen Schlauch nach Art eines Bypasses parallel zum Brennerhals geleitet und stromabwärts über das Griffteil und ein daran angeschlossenes Schlauchpaket einem Absauggebläse zugeführt.

Aus der JP 2021-023 972 A ist eine Brennervorrichtung zum Lichtbogenschweißen mit einem Brennergehäuse bekannt, in dem ein Elektrodenstab angeordnet ist, und mit einer an dem Brennergehäuse angeordneten Düse, welche eine erste Einheit aufweist, die den Elektrodenstab umgibt. Ferner weist die Düse eine Schutzgas-Ausströmöffnung und eine Schweißrauch-Absaugöffnung auf.

Die EP 2 842 684 B1 betrifft ein Schweißbrennersystem zur Verwendung bei Schweiß- oder Schneidvorgängen, bei denen Rauch entsteht, wobei das Schweißbrennersystem einen Schweißbrenner mit einem Kontaktspitzenhalter mit Kontaktspitze aufweist, welche durch eine abschmelzende Elektrode gebildet ist.

Aus der US 3 886 344 A geht eine Gas-Metall-Lichtbogen-Schweißpistole hervor, bei der ein Rauchabzug die Düse vollständig umgeben soll.

Aus Marconi M et al "Capture efficiency of integral fume extraction torches for GMA welding - Part 2" - Welding in the World, Springer, DE, Bd. 54, Nr. 3/4, 1. März 2010 (2010-03-01), Seiten 15-33, geht eine Vielzahl an unterschiedlichen Absaugeinrichtungsdesign für Brennerdüsen hervor.

Die US 2006/226136 A1 betrifft einen Handbrenner zum Schweißen oder Schneiden mit einer Düse, die dazu bestimmt sein soll, Rauch und Dämpfe zu entfernen, wobei eine Rauchabzugsleitung innerhalb des Brennergriffs angeordnet ist.

Nachteilig bei einer solchen Vorrichtung ist, dass die Handhabung des Brenners durch die am Brennerkopf angeordnete Absaugeinrichtung eingeschränkt ist. Insbesondere ist eine aus dem Stand der Technik bekannte Befestigung der Absaugdüse am Brennerkopf nachteilig, da die Konstruktion des Brennerkopfes geändert werden muss. Eine Austauschbarkeit des Brennerkörpers mit oder ohne Absaugung ist nicht gegeben. Zudem ist durch die Führung des Rauchgases über die parallel zum Brennerhals verlaufende Leitung der abgesaugte Volumenstrom stark begrenzt.

Ausgehend von den zuvor beschriebenen Nachteilen liegt der Erfindung die Aufgabe zugrunde, eine verbesserte Gasdüse und einen verbesserten Brennerkörper anzugeben, welche eine kompakte Bauform aufweisen und eine sichere und einfache Bedienung gewährleisten.

Diese Aufgabe wird gelöst mit einem Lichtbogenschweißbrenner mit einer kombinierten Absaug-Schutzgasdüse nach Anspruch 1.

Die Erfindung betrifft eine kombinierte Absaug-Schutzgasdüse eines Lichtbogenschweißbrenners mit nicht-abschmelzender Elektrode, wie etwa einen WIG- oder Plasmabrenner, mit einem Schutzgaskanal zum Zuführen von Schutzgas zum Schweißprozess und einer einstückig mit dem Schutzgaskanal verbundenen Absaugeinrichtung zum Absaugen des während des Schweißprozesses auftretenden Rauchgases.

Wie erwähnt, ist es beim Stand der Technik nachteilig, dass das über eine Düse am Brennerkopf abgesaugte Rauchgas über einen Schlauch in Art eines Bypasses in das Griffstück geführt und von dort über das Schlauchpaket abgeleitet wird. Denn dadurch ist die Handhabung des Brenners stark eingeschränkt.

Demgegenüber schlägt die Erfindung vor, die Befestigung der Absaugeinrichtung am Handstück vorzunehmen. Während also beim Stand der Technik die Fixierung der Düse am Brennerkopf erfolgt, ist die Rauchgasabführung bei der Erfindung über den Brennerkopf und eine Führung am Brennerkörper in das Griffstück angeordnet und nicht über eine separate Bypassleitung. Bei der Erfindung wird das Rauchgas von der Düse am Brennerkopf über den Brennerkörper der Düse zum Griffstück geführt.

Darüber hinaus ist der Einsatz des Schweißbrenners mit erfindungsgemäßer Düse nur im montierten Zustand der Düse mit Absaugbereich möglich, denn der Schutzgaskanal ist einstückig mit der Absaugeinrichtung verbunden. Aufgrund dieses Sicherheitsmerkmals ist der Benutzer optimal vor Rauchgasen geschützt.

Ferner bedarf es aufgrund der Einteiligkeit weniger Bauraum und es sind weniger Bauteile im Gesamtaufbau notwendig, wodurch eine einfachere Gestaltung der Einzelkomponenten möglich ist.

Weiterhin ist die Düse aufgrund der monolithischen Ausgestaltung von Schutzgaskanal und Absaugeinrichtung gegenüber dem Stand der Technik gewichts- und größenreduziert.

Gemäß einer ersten vorteilhaften Ausgestaltung der Erfindung weist die Absaugeinrichtung wenigstens einen den Schutzgaskanal zumindest bereichsweise koaxial umgebenden Absaugkanal für das Rauchgas auf. Auf diese Weise ist das beim Schweißprozess entstehende Rauchgas im wenigstens einen Absaugkanal koaxial zum Schutzgas im Schutzgaskanal geführt. Das Rauchgas strömt demnach in der Düse in entgegengesetzter Richtung zum Schutzgas. Durch diese Ausgestaltung ist eine besonders kompakte Bauform der Düse realisiert. Vorzugsweise können Schutzgaskanal und Absaugkanal zentrisch zueinander angeordnet sein.

Erfindungsgemäß weist die Absaugeinrichtung mehrere umfangseitig des Brennerkörpers, vorzugsweise gleichmäßig über den Brennerkörper verteilt angeordnete Absaugöffnungen für das Rauchgas auf. Die Absaugöffnungen können etwa im gleichen Abstand zueinander angeordnet sein, wobei jede Absaugöffnung über den Absaugkanal mit der Absaugeinrichtung in einer Fluidverbindung steht. Auf diese Weise wird das Rauchgas gleichmäßig abgesaugt. Vorzugsweise kann eine gerade Anzahl an Absaugöffnungen vorgesehen sein, um die Düse formtechnisch herstellen zu können.

Erfindungsgemäß ist die Düse elektrisch isolierend ausgebildet und besteht im Wesentlichen aus einem keramischen Werkstoff, vorzugsweise Aluminiumoxid. Die Keramik ist sowohl temperaturresistent als auch elektrisch isolierend. Die Montage und Demontage ist dennoch einfach und nicht so aufwendig, wie bei den aus dem Stand der Technik bekannten Düsen.

Besonders vorteilhaft ist, dass die Absaugöffnungen der Absaugeinrichtung bezüglich der Düsenlängsachse axial versetzt zum Schutzgasauslass der Düse angeordnet sind. Die Rauchgasführung erfolgt also über die Einlassdüse, wobei es jedoch vorliegend im Gegensatz zum Stand der Technik keiner Veränderung am Brennerkopf bedarf. Das Führen des Rauchgases koaxial zum eigentlichen Brennerkörper zum Gehäuse ist einfach zu realisieren. Es bedarf keines Bypasses, und vor allem erfordert es keine Veränderung des Brennerkörpers selbst.

In einer Weiterbildung der Erfindung ist vorgesehen, dass der Schutzgaskanal und die mindestens eine Absaugöffnung radial und in axialer Richtung versetzt angeordnet sind. Diese nach außen und weniger nach vorn gerichtete Ausrichtung ist insbesondere von Bedeutung für die Absaugung von Ozon als gasförmigem Schadstoff, das durch die Lichtbogenstrahlung induziert erst in einiger Entfernung zum Prozess entsteht. Hier schafft die Erfindung einen größeren Freiheitsgrad, indem der Absaugabschnitt, d.h. die Absaugöffnungen weiter hinten und nach außen gerichtet angeordnet sind. Demgegenüber muss bei der Ausführungsform im Stand der Technik der Brennerkopf selbst geändert werden, da die Ansaugdüse auf den Brennerkopf gesteckt wird, und zwar in dem Bereich, in dem die Keramikdüse des Brenners angesetzt wird.

Ein weiterer Vorteil dieser Ausführung ist, dass die Absaugung des Rauchgases und die Zuführung des Schutzgases in Strömungsrichtung hintereinander erfolgen, d.h. am vorderen Ende der Düse strömt Schutzgas aus und in Rauchgasabsaugrichtung gesehen dahinter wird erst abgesaugt. Hierdurch wird ein Erhitzen des Schutzgases durch heiße Rauchgase weitestgehend vermieden.

Gemäß einer vorteilhaften Ausgestaltung der Erfindung ist vorgesehen, dass die Absaugeinrichtung an ihrem der Schutzgasauslassöffnung zugewandten Ende einen kuppel- oder domförmig ausgebildeten Bereich aufweist. Durch eine solche Gestaltung kann die Größe des vom Schutzgas abgedeckten Bereichs der Bauteiloberfläche beeinflusst werden.

Die Absaugöffnungen können zumindest bereichsweise in dem kuppel- oder domförmigen Bereich der Absaugeinrichtung vorgesehen sein.

Besonders vorteilhaft ist, dass der Strömungsquerschnitt des Schutzgaskanals sich zum brennerseitigen Ende der Düse hin erweitert. Auf diese Weise wird die Zugänglichkeit der Engstellen in den Düsen verbessert.

Gemäß einer vorteilhaften Weiterbildung der Erfindung schließt der Absaugkanal in dem Bereich an den Schutzgaskanal an, in welchem der Schutzgaskanal sich zum brennerseitigen Ende der Düse hin erweitert.

Ziel ist eine homogene, turbulenzfreie Schutzgasströmung. Die konstruktive Gestaltung des Schutzgaskanals richtet sich dabei nach den Zugänglichkeiten und teilweise auch nach der Sicht auf den Lichtbogen, die Wolframelektrode bzw. das Schweißgut. Die Standardform einer Düse ist rund. Auch eine ovale Form ist unter anderem in Engspaltanwendungen denkbar, wo die Nebenachse die Zugänglichkeit sicherstellt und die Hauptsache den Strömungsraum so vergrößert, dass die Strömungsgeschwindigkeit nicht zu hoch wird und Turbulenzen vermieden werden. Grundsätzlich ist rund in fast allen Anwendungen vorteilhaft, weil es orientierungsunabhängig ist.

Gemäß einer vorteilhaften Weiterbildung der Erfindung ist vorgesehen, dass die Absaugöffnungen einen elliptischen oder ovalförmigen Querschnitt aufweisen, insbesondere, dass sich die Hauptachse des elliptischen oder ovalförmigen Querschnitts in etwa parallel zur Längsachse der Düse erstreckt.

In einer weiteren vorteilhaften Variante der Erfindung weist die Düse ein Gewinde, insbesondere einen Gewindeeinsatz zum Aufschrauben auf einen Brennerkörper auf. Auf diese Weise ist eine einfache Montage und Austauschbarkeit der Düse am Brenner, insbesondere am Brennerkörper gewährleistet.

Die Düsen können in unterschiedlichen Längen ausgebildet sein. Beispielsweise können kurze oder lange Varianten bei verschiedenen Anwendungsrandbedingungen eingesetzt werden. Diese Varianten unterscheiden sich hinsichtlich der Güte der Schutzgasabdeckung durch die unterschiedlichen Laminarisierungsstrecken. Des Weiteren bedingt die unterschiedliche Länge der Düsen auch eine unterschiedliche Länge der Wolframelektrode, was auch Einfluss auf die Strombelastbarkeit infolge der ohmschen Erwärmung in der Elektrode hat. Somit hat die Länge der Düsen auch begrenzten Einfluss auf den Schweißprozess.

Gemäß einer vorteilhaften Weiterbildung der Erfindung steht ein Absaugrohr zum Absaugen des Rauchgases mit der Absaugeinrichtung der Düse in Fluidverbindung.

Es ist denkbar, dass das Absaugrohr Teil eines Handgriffes für den Brenner ist, insbesondere, dass der Handgriff aus zwei Halbschalen gebildet ist.

Weitere Ziele, Vorteile, Merkmale und Anwendungsmöglichkeiten der vorliegenden Erfindung ergeben sich aus der nachfolgenden Beschreibung eines Ausführungsbeispiels anhand der Zeichnung.

Dabei zeigen zum Teil schematisch:
- Figur 1: eine perspektivische Darstellung einer kombinierten Absaug-Schutzgasdüse,
- Figur 2: eine Schnittdarstellung der Düse gemäß Figur 1 mit einem Innengewinde zum Aufschrauben auf einen Brennerkörper,
- Figur 3: eine weitere Schnittdarstellung der Düse gemäß Figur 1,
- Figur 4: einen Brennerkörper mit Düse gemäß Figur 1 und
- Figur 5: eine Schnittdarstellung des Brennerkörpers gemäß Figur 4.

Gleiche oder gleichwirkende Bauteile werden in den nachfolgend dargestellten Figuren der Zeichnung anhand einer Ausführungsform mit Bezugszeichen versehen, um die Lesbarkeit zu verbessern.

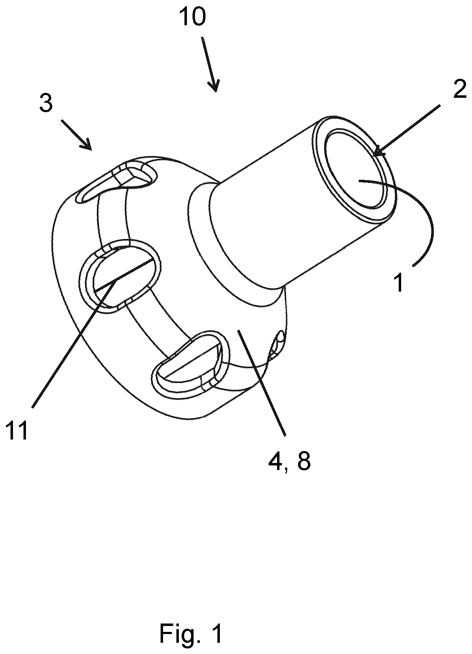

Aus Figur 1 geht eine kombinierte Absaug-Schutzgasdüse 10 für einen Lichtbogenschweißbrenner mit nicht-abschmelzender Elektrode, insbesondere WIG- oder Plasmabrenner hervor.

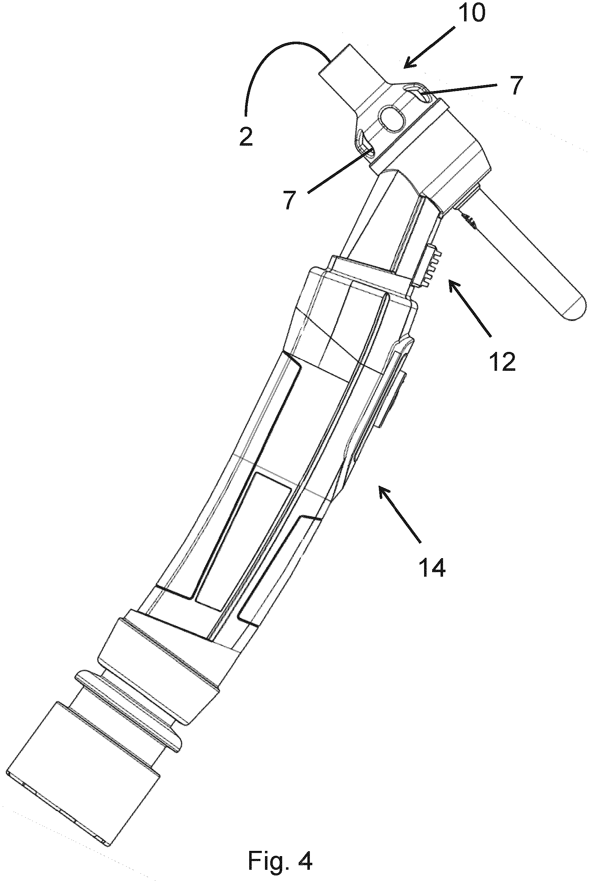

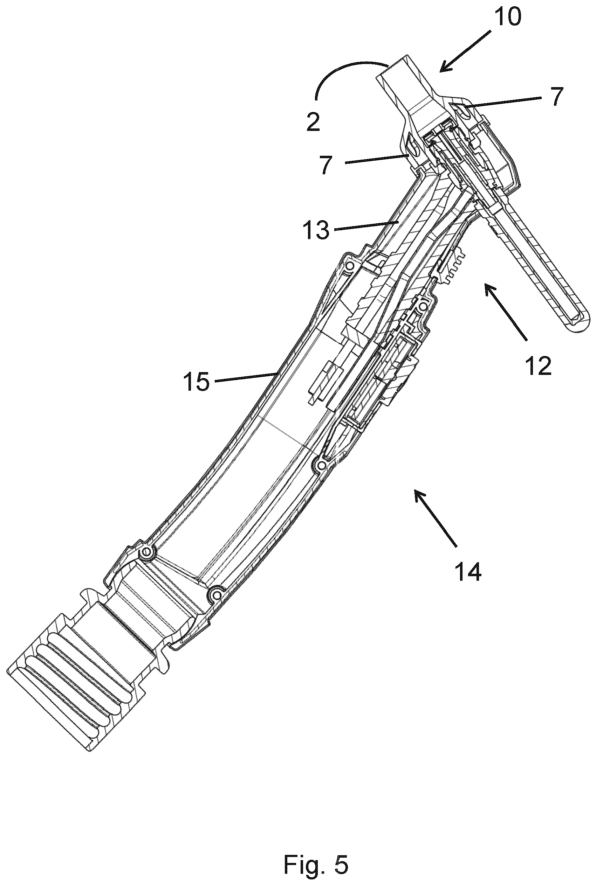

Diese Düse 10 wird an einem in Figur 1 nicht dargestellten Brennerkopf des Brennerkörpers 12 angeordnet, insbesondere aufgeschraubt. Ein solcher Brennerkörper 12 ist in den Figuren 4 und 5 dargestellt.

Die Düse 10 weist einen Schutzgaskanal 1 zum Zuführen von Schutzgas zum Schweißprozess auf, welcher in der vorliegenden Ausführungsform zentral in der Düse 10 geführt ist.

Der Schutzgaskanal 1 ist vorliegend einstückig mit einer mit dem Schutzgaskanal 1 verbundenen Absaugeinrichtung 3 zum Absaugen des während des Schweißprozesses auftretenden Rauchgases verbunden.

Im hier beschriebenen Ausführungsbeispiel weist die Absaugeinrichtung 3 einen, den Schutzgaskanal 1 zumindest bereichsweise koaxial umgebenden Absaugkanal 6 für das Rauchgas auf. Zum Absaugen des Rauchgases sind mehrere umfangseitig des Brennerkörpers, vorliegend gleichmäßig über den Brennerkörper verteilt angeordnete Absaugöffnungen 7 für das Rauchgas vorgesehen. Diese Absaugöffnungen 7 stehen mit dem wenigstens einen Absaugkanal 6 in Fluidverbindung. Vorzugsweise können Schutzgaskanal 1 und Absaugkanal 6 zentrisch zueinander angeordnet sein.

Die Absaugöffnungen 7 können einen elliptischen oder ovalförmigen Querschnitt aufweisen und die Hauptachse 11 des elliptischen oder ovalförmigen Querschnitts kann sich in etwa parallel zur Längsachse 5 der Düse 10 erstrecken.

Die Absaugöffnungen 7 der Absaugeinrichtung 3 sind bezüglich der Düsenlängsachse 5 axial versetzt zur Schutzgasauslassöffnung 2 der Düse 10 angeordnet. Darüber hinaus sind der Schutzgaskanal 1 und die mindestens eine Absaugöffnung 7 radial und in axialer Richtung versetzt angeordnet. Mit anderen Worten sind die Absaugöffnungen 7 gegenüber dem Gasauslass 2 für das Schutzgas in Strömungsrichtung des Rauchgases zurückversetzt und radial nach außen versetzt, so dass diese Absaugöffnungen 7 beabstandet zum Schweißprozess sind.

Das im Schweißprozess entstehende Rauchgas oder Schadstoffe werden also durch die Absaugöffnungen 7 in den wenigstens einen Absaugkanal 6 eingesaugt und durch ein in einem Handgriff des Brenners angeordnetes Absaugrohr bzw. einen Absaugkanal 13 abgesaugt. Die Absaugung des Rauchgases und die Zuführung des Schutzgases erfolgt in Strömungsrichtung hintereinander, d.h. am vorderen Ende der Düse 10 strömt Schutzgas aus und in Rauchgasabsaugrichtung gesehen dahinter wird erst abgesaugt. Hierdurch wird ein Erhitzen des Schutzgases durch heiße Rauchgase weitestgehend vermieden.

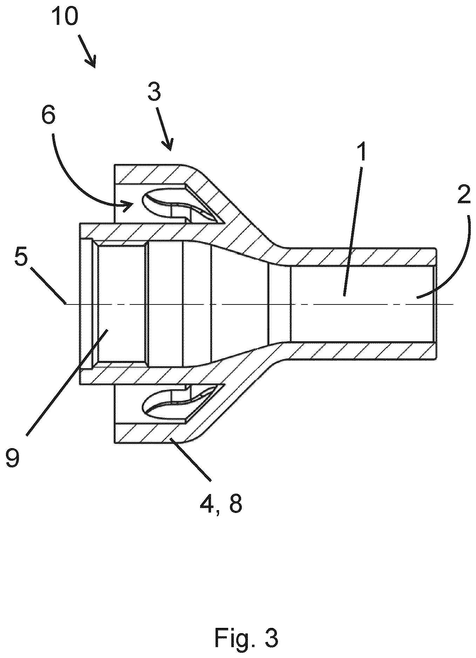

Wie aus den Figuren 1 bis 3 weiter hervorgeht, weist die Absaugeinrichtung 3 an ihrem der Schutzgasauslassöffnung 2 zugewandten Ende 8 einen kuppel- oder domförmig ausgebildeten Bereich 4 auf, wobei die Absaugöffnungen 7 zumindest bereichsweise in dem kuppel- oder domförmigen Bereich 4 der Absaugeinrichtung 3 vorgesehen sind.

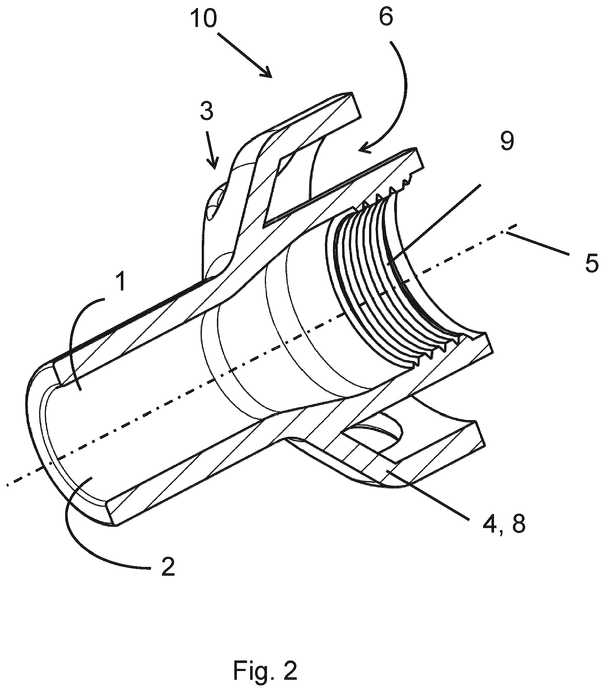

Wie insbesondere der Schnittdarstellung gemäß Figur 2 entnommen werden kann, erweitert sich der Strömungsquerschnitt des Schutzgaskanals 1 zum brennerseitigen Ende der Düse 10 hin. Der Absaugkanal 6 schließt in dem Bereich an den Schutzgaskanal 1 an, in welchem der Schutzgaskanal 1 sich zum brennerseitigen Ende der Düse 10 hin erweitert.

Die Düse 10 ist erfindungsgemäß elektrisch isolierend ausgebildet. Hierzu ist sie aus einem keramischen Werkstoff, vorzugsweise Aluminiumoxid hergestellt. Wie aus den Figuren 4 und 5 hervorgeht, ist die Düse 10 an dem Brennerkörper 12 zum thermischen Fügen wenigstens eines Werkstücks, insbesondere zum Lichtbogenschweißen angeordnet. Aus Figur 2 geht hervor, dass die Düse 10 im vorliegenden Ausführungsbeispiel ein Gewinde 9 aufweist zum Aufschrauben auf den Brennerkörper 12. Denkbar ist es auch, dass die Düse 10 einen Gewindeeinsatz zum Aufschrauben auf den Brennerkörper 12 aufweist.

Weiter ist den Figuren 4 und 5 ein Absaugrohr 13 zum Absaugen des Rauchgases zu entnehmen, welches mit der Absaugeinrichtung 3 der Düse 10 in Fluidverbindung steht.

Das Absaugrohr 13 ist Teil eines Handgriffes 14 für den Brenner, welcher vorliegend aus zwei Halbschalen 15 gebildet ist.

### Bezugszeichenliste

- 1: Schutzgaskanal
- 2: Schutzgasauslassöffnung
- 3: Absaugeinrichtung
- 4: kuppel- oder domförmiger Bereich
- 5: Längsachse Düse
- 6: Absaugkanal
- 7: Absaugöffnungen
- 8: Ende Absaugeinrichtung
- 9: Gewinde
- 10: Schutzgas-Absaugdüse
- 11: Hauptachse des elliptischen Querschnitts
- 12: Brennerkörper
- 13: Absaugrohr
- 14: Handgriff
- 15: Halbschalen

## Patentansprüche

1. Lichtbogenschweißbrenner mit nicht-abschmelzender Elektrode, insbesondere WIG- oder Plasmabrenner, mit einem Brennerkörper (12) zum thermischen Fügen wenigstens eines Werkstücks mit einer kombinierten Absaug-Schutzgasdüse (10) mit einem Schutzgaskanal (1) zum Zuführen von Schutzgas zum Schweißprozess **dadurch gekennzeichnet, dass** die Absaug-Schutzgasdüse (10) eine einstückig mit dem Schutzgaskanal (1) verbundene Absaugeinrichtung (3) zum Absaugen des während des Schweißprozesses auftretenden Rauchgases enthält, wobei die Absaugeinrichtung (3) mehrere umfangseitig, gleichmäßig über die Düse (10) verteilt angeordnete Absaugöffnungen (7) für das Rauchgas aufweist, wobei die Absaug-Schutzgasdüse (10) elektrisch isolierend ausgebildet ist und im Wesentlichen aus einem keramischen Werkstoff besteht.

2. Lichtbogenschweißbrenner nach Anspruch 1, **dadurch gekennzeichnet, dass** die Absaugreinrichtung (3) mindestens einen den Schutzgaskanal (1) zumindest bereichsweise koaxial umgebenden Absaugkanal (6) für das Rauchgas aufweist.

3. Lichtbogenschweißbrenner nach Anspruch 1, **dadurch gekennzeichnet, dass** die Absaugöffnungen (7) der Absaugeinrichtung (3) bezüglich der Düsenlängsachse (5) axial versetzt zum Schutzgasauslass (2) der Düse (10) angeordnet sind.

4. Lichtbogenschweißbrenner nach Anspruch 1 oder 2, **dadurch gekennzeichnet, dass** der Schutzgaskanal (1) und die mindestens eine Absaugöffnung (7) radial und in axialer Richtung versetzt angeordnet ist.

5. Lichtbogenschweißbrenner nach einem der vorherigen Ansprüche, **dadurch gekennzeichnet, dass** die Absaugeinrichtung (3) an ihrem der Schutzgasauslassöffnung (2) zugewandten Ende (8) einen kuppel- oder domförmig ausgebildeten Bereich (4) aufweist.

6. Lichtbogenschweißbrenner nach Anspruch 5 **dadurch gekennzeichnet, dass** die Absaugöffnungen (7) zumindest bereichsweise in dem kuppel- oder domförmigen Bereich (4) der Absaugeinrichtung (3) vorgesehen sind.

7. Lichtbogenschweißbrenner nach einem der vorherigen Ansprüche, **dadurch gekennzeichnet, dass** der Strömungsquerschnitt des Schutzgaskanals (1) sich zum brennerseitigen Ende der Düse (10) hin erweitert.

8. Lichtbogenschweißbrenner nach einem der vorherigen Ansprüche, **dadurch gekennzeichnet, dass** der Absaugkanal (6) in dem Bereich an den Schutzgaskanal (1) anschließt, in welchem der Schutzgaskanal (1) sich zum brennerseitigen Ende der Düse (10) hin erweitert.

9. Lichtbogenschweißbrenner nach einem der vorherigen Ansprüche, **dadurch gekennzeichnet, dass** die Absaugöffnungen (7) einen elliptischen oder ovalförmigen Querschnitt aufweisen.

10. Lichtbogenschweißbrenner nach Anspruch 9, **dadurch gekennzeichnet, dass** sich die Hauptachse (11) des elliptischen oder ovalförmigen Querschnitts in etwa parallel zur Längsachse (5) der Düse (10) erstreckt.

11. Lichtbogenschweißbrenner nach einem der vorherigen Ansprüche, **dadurch gekennzeichnet, dass** die Düse (10) ein Gewinde (9) zum Aufschrauben auf den Brennerkörper (12) aufweist.

12. Lichtbogenschweißbrenner nach Anspruch 1, **dadurch gekennzeichnet, dass** das Absaugrohr (13) Teil eines Handgriffes (14) für den Brenner ist und der Handgriff (14) aus zwei Halbschalen (15) gebildet ist.

## Claims

1. Arc welding torch with non-consumable electrode, in particular TIG or plasma torch, comprising a torch body (12) for thermally joining at least one workpiece having a combined extraction/shielding gas nozzle (10) with a shielding gas duct (1) for feeding shielding gas to the welding process, **characterized in that** the extraction/shielding gas nozzle (10) contains an extraction device (3), which is connected in one piece to the shielding gas duct (1), for extracting the fumes that occur during the welding process, wherein the extraction device (3) has a plurality of circumferentially arranged extraction openings (7), which are distributed uniformly over the nozzle (10), for the fumes, wherein the extraction/shielding gas nozzle (10) is designed to be electrically insulating and consists substantially of a ceramic material.

2. Arc welding torch according to Claim 1, **characterized in that** the extraction device (3) has at least one extraction duct (6) for the fumes which at least regionally coaxially surrounds the shielding gas duct (1).

3. Arc welding torch according to Claim 1, **characterized in that** the extraction openings (7) of the extraction device (3) are arranged axially offset relative to the shielding gas outlet (2) of the nozzle (10) with respect to the nozzle longitudinal axis (5).

4. Arc welding torch according to Claim 1 or 2, **characterized in that** the shielding gas duct (1) and the at least one extraction opening (7) are arranged radially and axially offset.

5. Arc welding torch according to any of the preceding claims, **characterized in that** the extraction device (3) has, at its end (8) facing towards the shielding gas outlet opening (2), a dome-shaped or domed region (4).

6. Arc welding torch according to Claim 5, **characterized in that** the extraction openings (7) are provided at least regionally in the dome-shaped or domed region (4) of the extraction device (3).

7. Arc welding torch according to any of the preceding claims, **characterized in that** the flow cross section of the shielding gas duct (1) widens towards the torch-side end of the nozzle (10).

8. Arc welding torch according to any of the preceding claims, **characterized in that** the extraction duct (6) adjoins the shielding gas duct (1) in the region in which the shielding gas duct (1) widens towards the torch-side end of the nozzle (10).

9. Arc welding torch according to any of the preceding claims, **characterized in that** the extraction openings (7) have an elliptical or oval-shaped cross section.

10. Arc welding torch according to Claim 9, **characterized in that** the main axis (11) of the elliptical or oval-shaped cross section extends approximately parallel to the longitudinal axis (5) of the nozzle (10).

11. Arc welding torch according to any of the preceding claims, **characterized in that** the nozzle (10) has a thread (9) for screwing onto the torch body (12).

12. Arc welding torch according to Claim 1, **characterized in that** the extraction pipe (13) is part of a handle (14) for the torch and the handle (14) is formed from two half-shells (15).

## Revendications

1. Chalumeau de soudage à l'arc avec électrode réfractaire, en particulier torche TIG ou torche plasma, comprenant un corps de torche (12) pour l'assemblage thermique d'au moins une pièce à traiter, une buse combinée (10) d'aspiration - de gaz protecteur présentant un canal (1) de gaz protecteur pour l'alimentation en gaz protecteur du processus de soudage, **caractérisé en ce que** la buse (10) d'aspiration - de gaz protecteur comprend un dispositif d'aspiration (3) relié d'un seul tenant au canal (1) de gaz protecteur pour aspirer les fumées produites pendant le processus de soudage, le dispositif d'aspiration (3) présentant plusieurs ouvertures d'aspiration (7) pour les fumées, réparties de manière régulière sur la circonférence de la buse (10), la buse (10) d'aspiration - de gaz protecteur étant électriquement isolante et constituée essentiellement d'un matériau céramique.

2. Chalumeau de soudage à l'arc selon la revendication 1, **caractérisé en ce que** le dispositif d'aspiration (3) présente au moins un canal d'aspiration (6) pour les fumées, qui entoure au moins partiellement, de manière coaxiale, le canal (1) de gaz protecteur.

3. Chalumeau de soudage à l'arc selon la revendication 1, **caractérisé en ce que** les ouvertures d'aspiration (7) du dispositif d'aspiration (3) sont agencées de manière décalée axialement par rapport à l'axe longitudinal (5) de la buse, par rapport à la sortie de gaz protecteur (2) de la buse (10).

4. Chalumeau de soudage à l'arc selon la revendication 1 ou la revendication 2, **caractérisé en ce que** le canal (1) de gaz protecteur et au moins une ouverture d'aspiration (7) sont agencés de manière décalée radialement et dans la direction axiale.

5. Chalumeau de soudage à l'arc selon l'une des revendications précédentes, **caractérisé en ce que** le dispositif d'aspiration (3) présente, à son extrémité (8) tournée vers l'ouverture de sortie de gaz protecteur (2), une zone (4) en forme de dôme ou de coupole.

6. Chalumeau de soudage à l'arc selon la revendication 5, **caractérisé en ce que** les ouvertures d'aspiration (7) sont au moins partiellement aménagées dans la zone (4) en forme de dôme ou de coupole du dispositif d'aspiration (3).

7. Chalumeau de soudage à l'arc selon l'une des revendications précédentes, **caractérisé en ce que** la section d'écoulement du canal (1) de gaz protecteur s'élargit vers l'extrémité de la buse (10) située du côté de la torche.

8. Chalumeau de soudage à l'arc selon l'une des revendications précédentes, **caractérisé en ce que** le canal d'aspiration (6) est raccordé au canal (1) de gaz protecteur dans la zone dans laquelle le canal (1) de gaz protecteur s'élargit vers l'extrémité de la buse (10) située du côté de la torche.

9. Chalumeau de soudage à l'arc selon l'une des revendications précédentes, **caractérisé en ce que** les ouvertures d'aspiration (7) présentent une section transversale de forme elliptique ou ovale.

10. Chalumeau de soudage à l'arc selon la revendication 9, **caractérisé en ce que** l'axe principal (11) de la section transversale de forme elliptique ou ovale s'étend approximativement parallèlement à l'axe longitudinal (5) de la buse (10).

11. Chalumeau de soudage à l'arc selon l'une des revendications précédentes, **caractérisé en ce que** la buse (10) présente un filetage (9) permettant son vissage sur le corps de torche (12).

12. Chalumeau de soudage à l'arc selon la revendication 1, **caractérisé en ce que** le tube d'aspiration (13) fait partie d'une poignée (14) pour la torche et que la poignée (14) est formée par deux demi-coques (15).
